# EUROPEAN PATENT APPLICATION

(11) **EP 1 761 064 A2**
(43) Date of publication of application: **07.03.2007**
(21) Application number: 06119478.3
(22) Date of filing: 24.08.2006
(51) Int. Cl.: H04N 7/26

(54) **Methods and apparatus for video intraprediction encoding and decoding**

(30) Priority: 06.09.2005 KR 20050082629
(71) Applicant: Samsung Electronics Co., Ltd., Suwon-si 442-742 Gyeonggi-Do (KR)
(72) Inventor: Song, Byung-cheol 106-1802 Dongsuwon, Suwon-si Gyeonggi-do (KR)
(74) Representative: Clark, David James

(57) **Abstract**

Methods and apparatus for video intraprediction encoding and decoding are provided. The encoding method includes dividing an input block into at least first and second areas; performing intraprediction-encoding on pixels of the first area; reconstructing the intraprediction-encoded pixels; and predicting pixels of the second area using the intraprediction-encoded pixels of the first area according to a prediction mode of a plurality of prediction modes. The decoding method includes receiving a bitstream comprising data for pixels of a first area and direction information; determining an intraprediction mode for a current block; performing intraprediction-decoding on pixels of the first area; and predicting the pixels of a second area using the received direction information and the intraprediction-decoded pixels for the first area.

## Description

Apparatuses and methods consistent with the present invention relate to video intraprediction encoding and decoding.

The H.264/Moving Picture Expert Group (MPEG)-4/Advanced Video Coding (AVC) standard is a video compression standard which adopts various techniques such as multiple reference motion compensation, loop filtering, variable block size motion compensation, and context adaptive binary arithmetic coding (CABAC) for the purpose of improving compression efficiency.

According to the H.264 standard, a picture is divided into macroblocks for video encoding. After each of the macroblocks is encoded in all interprediction and intraprediction encoding modes, an appropriate encoding mode is selected according to the bit rate required for encoding the macroblock and the distortion between the original macroblock and the decoded macroblock. Then the macroblock is encoded in the selected encoding mode.

In intraprediction, instead of referring to reference pictures, a prediction value of a macroblock to be encoded is calculated using the value of a pixel that is spatially adjacent to the macroblock to be encoded, and the difference between the prediction value and the pixel value is encoded when encoding macroblocks of the current picture. Intraprediction modes are divided into 4x4 intraprediction modes for luminance components, 8x8 intraprediction modes (in case of a high profile), 16x16 intraprediction modes, and an intraprediction mode for chrominance components.

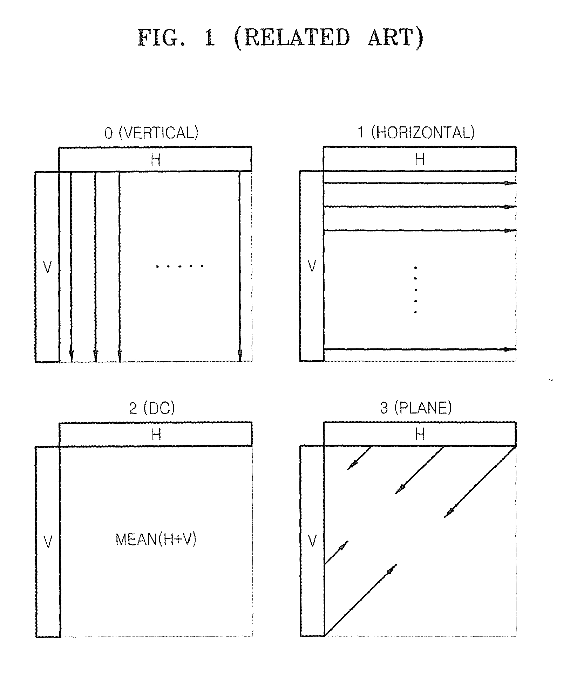

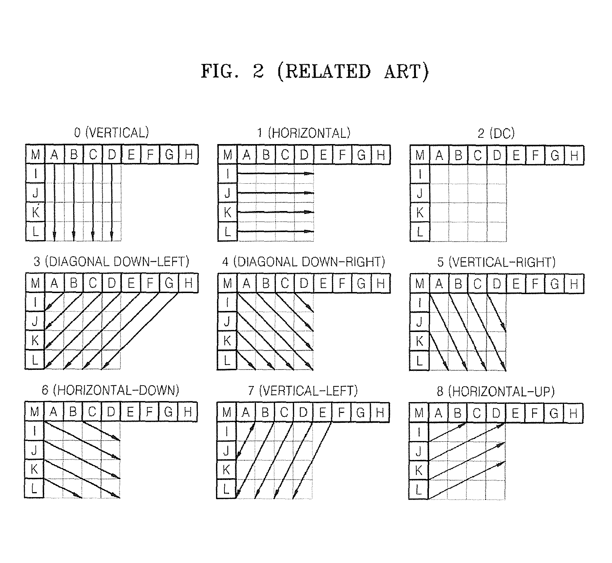

FIG. 1 illustrates related art 16x16 intraprediction modes for luminance components according to the H.264 standard, and FIG. 2 illustrates related art 4x4 intraprediction modes for luminance components according to the H.264 standard.

Referring to FIG. 1, there are four 16x16 intraprediction modes, i.e. a vertical mode 0, a horizontal mode 1, a direct current (DC) mode 2, and a plane mode 3. Referring to FIG. 2, there are nine 4x4 intraprediction modes, i.e. a vertical mode 0, a horizontal mode 1, a DC mode 2, a diagonal down-left mode 3, a diagonal down-right mode 4, a vertical-right mode 5, a horizontal-down mode 6, a vertical-left mode 7, and a horizontal-up mode 8.

For example, when a 4x4 current block is prediction encoded in a mode 0, i.e., the vertical mode of FIG. 2, pixel values of pixels A through D adjacent above the 4x4 current block are predicted to be the pixel values of the 4x4 current block. In other words, the pixel value of the pixel A is predicted to be the pixel values of the four pixels of the first column of the 4x4 current block, the pixel value of the pixel B is predicted to be the pixel values of the four pixels of the second column of the 4x4 current block, the pixel value of the pixel C is predicted to be the pixel values of the four pixels of the third column of the 4x4 current block, and the pixel value of the pixel D is predicted to be the pixel values of the four pixels of the fourth column of the 4x4 current block. Next, the difference between the pixel values of pixels of the 4x4 current block predicted using the pixels A through D and the actual pixel values of pixels included in the original 4x4 current block is obtained and encoded.

In video encoding according to the H.264 standard, the current macroblock is encoded in a total of thirteen modes including the 4x4 intraprediction modes and the 16x16 intraprediction modes and is then intraprediction encoded in the encoding mode having the smallest cost. This means that the current macroblock is intrapredicted in the four 16x16 intraprediction modes and the one having the smallest cost is selected. Each of the 4x4 sub-blocks of the current macroblock is intrapredicted in the nine 4x4 intraprediction modes, and the one having the smallest cost is selected for each sub-block. The cost of the selected 16x16 intraprediction mode and the sum of the costs of the selected 4x4 intraprediction modes are compared, and the mode having the smallest cost is selected.

In this way, intraprediction according to a related art uses pixels sampled from neighboring blocks of the current block to be intrapredicted. As a result, when the video of the current block is very different from that of the neighboring blocks, the difference between an intrapredicted block and an actual block may be large. In these circumstances, prediction and coding efficiency are limited.

It is an aim of exemplary embodiments of the present invention to address at least one drawback associated with the related art, whether referred to herein, or otherwise.

According to one aspect of the present invention, there is provided a method of video intraprediction encoding, comprising: dividing an input block into at least two areas; performing intraprediction-encoding on pixels of a first area of the at least two areas using pixels of a neighboring block; reconstructing the intraprediction-encoded pixels of the first area; and predicting pixels of a second area of the at least two areas using the intraprediction-encoded pixels of the first area according to at least one prediction mode of a plurality of prediction modes.

According to another aspect of the present invention, there is provided an apparatus for video intraprediction encoding, the apparatus comprising: a block division unit which divides an input block into at least first and second areas; a first intrapredictor which performs intraprediction on pixels of the first area using pixels of a neighboring block; and a second intrapredictor which reconstructs the intraprediction-encoded pixels of the first area and predicts pixels of the second area using the intraprediction-encoded pixels of the first area according to at least one prediction mode of a plurality of prediction modes.

According to still another aspect of the present invention, there is provided a method of video intraprediction decoding, the method comprising: receiving a bitstream comprising data for pixels of a first area that are intraprediction-encoded using pixels of a neighboring block and direction information; determining an intraprediction mode for a current block; performing intraprediction-decoding on pixels of the first area using the received data for the pixels of the first area; and predicting the pixels of a second area using the received direction information and the intraprediction-decoded pixels for the first area.

According to yet another aspect of the present invention, there is provided an apparatus for video intraprediction decoding, the method comprising: receiving a bitstream comprising data for pixels of a first area that are intraprediction-encoded using pixels of a neighboring block and direction information; performing intraprediction-decoding on pixels of the first area using the received data for the pixels of the first area; and predicting the pixels of the second area using the received direction information and the intraprediction-decoded pixels for the first area.

According to still yet another aspect of the present invention, there is provided an apparatus for video intraprediction decoding, the apparatus comprising: an intraprediction mode determination unit which receives a bitstream comprising data for pixels of a first area that are intraprediction-encoded using pixels of a neighboring block and direction information, and determines an intraprediction mode for a current block; a first intrapredictor which performs intraprediction-decoding on pixels of the first area using the received data for the pixels of the first area; and a second intrapredictor which predicts the pixels of the second area using the received direction information and the intraprediction-decoded pixels for the first area.

According to still a further aspect of the present invention there is provided an apparatus for video intraprediction decoding, the apparatus comprising: a receiving unit which receives a bitstream including data for pixels of a first area that are intraprediction-encoded using pixels of a neighboring block and direction information; a first intrapredictor which performs intraprediction-decoding on pixels of the first area using the received data for the pixels of the first area; and a second intrapredictor which predicts the pixels of the second area using the received direction information and the intraprediction-decoded pixels for the first area.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates related art 16x16 intraprediction modes for luminance components according to the H.264 standard;
FIG. 2 illustrates related art 4x4 intraprediction modes for luminance components according to the H.264 standard;
FIG. 3 is a block diagram of a video encoder which uses an apparatus for video intraprediction encoding according to an exemplary embodiment of the present invention;
FIG. 4 is a block diagram of an intraprediction unit of FIG. 3 according to an exemplary embodiment of the present invention;
FIGS. 5A and 5B illustrate division of an input block, performed by a block division unit of FIG. 4;
FIG. 6 illustrates intraprediction of an input block divided as illustrated in FIG. 5A, performed by a first intrapredictor of FIG. 4;
FIG. 7 illustrates processing orders in which a second intrapredictor processes 4x4 blocks according to an exemplary embodiment of the present invention;
FIGS. 8A through 8C illustrate the prediction of pixels of a second area of a first block among the 4x4 blocks illustrated in FIG. 7;
FIG. 9 illustrates the generation of right neighboring pixels performed by the second intrapredictor to process a fourth block among the 4x4 blocks illustrated in FIG. 7 according to an exemplary embodiment of the present invention;
FIGS. 10A through 10C illustrate the prediction of pixels of a second area of a thirteenth block among the 4x4 blocks illustrated in FIG. 7;
FIG. 11 is a flowchart illustrating a method of video intraprediction encoding according to an exemplary embodiment of the present invention;
FIG. 12 is a block diagram of a video decoder which uses an apparatus for video intraprediction decoding according to an exemplary embodiment of the present invention;
FIG. 13 is a block diagram of an intraprediction unit of FIG. 12 according to an exemplary embodiment of the present invention; and
FIG. 14 is a flowchart illustrating a method of video intraprediction decoding according to an exemplary embodiment of the present invention.

Hereinafter, certain exemplary embodiments of the present invention will be described in detail with reference to the accompanying drawings.

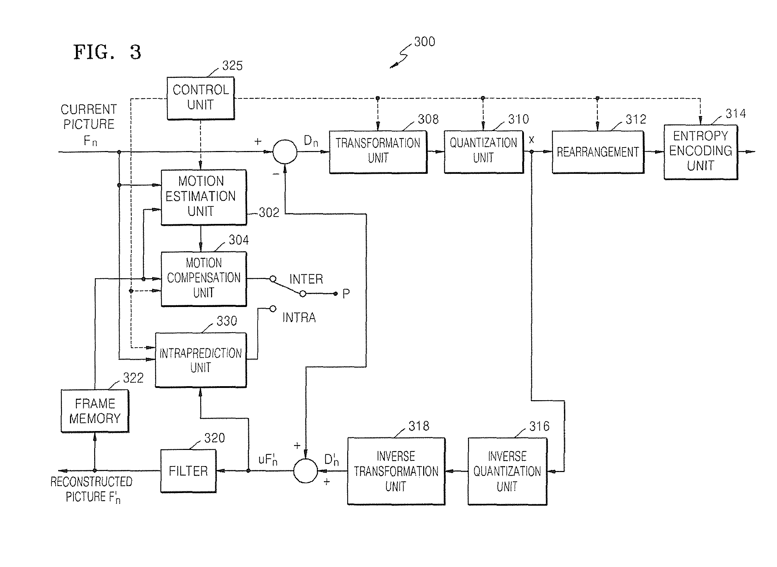

FIG. 3 is a block diagram of a video encoder 300 which uses an apparatus for video intraprediction encoding according to an exemplary embodiment of the present invention. In the following description, for convenience of explanation, an apparatus for video intraprediction encoding according to an exemplary embodiment of the present invention is applied to an H.264 video encoder. However, the apparatus for video intraprediction encoding according to an exemplary embodiment of the present invention can also be applied to other compression methods using intraprediction.

Referring to FIG. 3, the illustrative video encoder 300 includes a motion estimation unit 302, a motion compensation unit 304, an intraprediction unit 330, a transformation unit 308, a quantization unit 310, a re-arrangement unit 312, an entropy-coding unit 314, an inverse quantization unit 316, an inverse transformation unit 318, a filter 320, a frame memory 322, and a control unit 325.

For intraprediction, the motion estimation unit 302 searches in a reference picture for a prediction value of a macroblock of the current picture.

When a reference block is found in units of 1/2 pixels or 1/4 pixels, the motion compensation unit 304 calculates the median pixel value of the reference block to determine reference block data. Interprediction is performed in this way by the motion estimation unit 302 and the motion compensation unit 304.

The intraprediction unit 330 searches in the current picture for a prediction value of the current block for intraprediction. In particular, the intraprediction unit 330 according to an exemplary embodiment of the present invention receives the current block to be prediction-encoded and performs intraprediction encoding in 16x16 intraprediction modes, 4x4 intraprediction modes, or 8x8 intraprediction modes, and chrominance intraprediction modes of the type or similar to those illustrated in FIGS. 1 and 2. The intraprediction unit 330 also divides the current block into at least two areas, performs intraprediction on one of the at least two areas, e.g., a first area, and then predicts pixels of a remaining area, i.e., a second area, using reconstructed information of the intrapredicted first area.

More specifically, the intraprediction unit 330 divides the current block into at least two areas and performs intraprediction on pixels of a first area of the at least two areas using pixels of blocks neighboring the current block. The intraprediction unit 330 then predicts pixels of a second area of the at least two areas using an average of pixels of the first area positioned in a direction as a predictor. The direction may be predetermined. By first performing intraprediction on a portion of the current block to be intrapredicted and then performing intraprediction on the remaining portion of the current block using reconstructed information of the first intrapredicted portion, it is possible to use not only pixels of neighboring blocks but also pixel information of the current block in intraprediction, thus contributing to improvement of prediction efficiency.

The control unit 325 controls components of the video encoder 300 and determines a prediction mode for the current block. For example, the control unit 325 determines a prediction mode which minimizes the difference between an interpredicted or intrapredicted block and the original block to be the prediction mode for the current block. More specifically, the control unit 325 calculates the costs of an interpredicted video and an intrapredicted video and determines the prediction mode which has the smallest cost to be the final prediction mode. Here, cost calculation may be performed using various methods such as a sum of absolute difference (SAD) cost function, a sum of absolute transformed difference (SATD) cost function, a sum of squares difference (SSD) cost function, a mean of absolute difference (MAD) cost function, a Lagrange cost function or other such cost function. An SAD is a sum of absolute values of prediction residues of 4x4 blocks. An SATD is a sum of absolute values of coefficients obtained by applying a Hadamard transform to prediction residues of 4x4 blocks. An SSD is a sum of the squares of prediction residues of 4x4 block prediction samples. An MAD is an average of absolute values of prediction residues of 4x4 block prediction samples. The Lagrange cost function is a modified cost function including bitstream length information.

Once prediction data to be referred to by a macroblock of the current frame is found through interprediction or intraprediction, it is extracted from the macroblock of the current frame, transformed by the transformation unit 308, and then quantized by the quantization unit 310. The portion of the macroblock of the current frame remaining after subtracting a motion-estimated reference block is referred to as a residue. In general, the residue is encoded to reduce the amount of data in video encoding. The quantized residue is processed by the rearrangement unit 312 and encoded in the entropy-encoding unit 314.

To obtain a reference picture used for interprediction, a quantized picture is processed by the inverse quantization unit 316 and the inverse transformation unit 318, and thus the current picture is reconstructed. The reconstructed current picture is processed by the filter 320 performing deblocking filtering, and is then stored in the frame memory 322 for use in interprediction of the next picture. Reconstructed video data of the first area prior to deblocking filtering is input to the intraprediction unit 330 to be used as reference data for prediction of pixels of the second area.

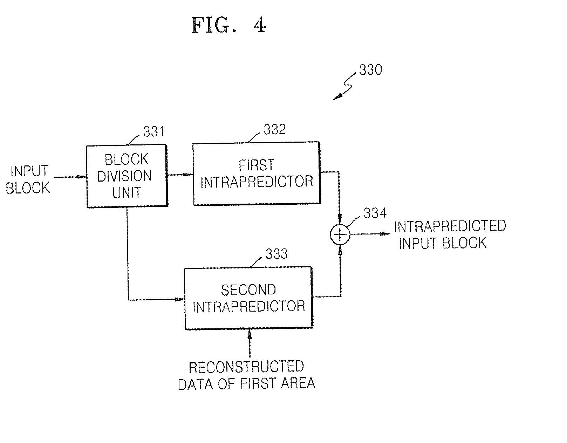

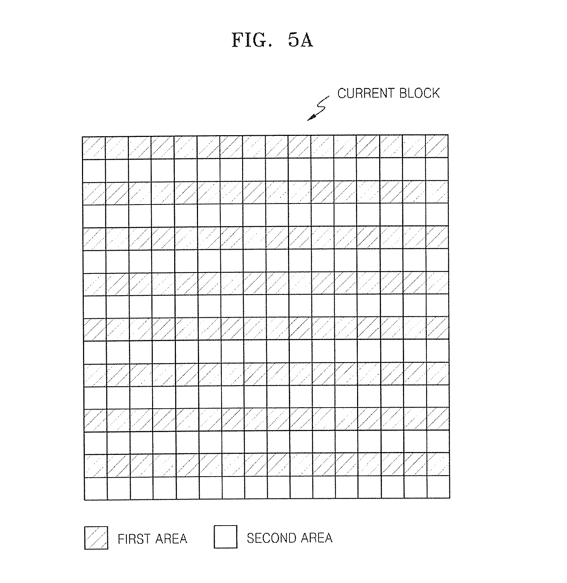

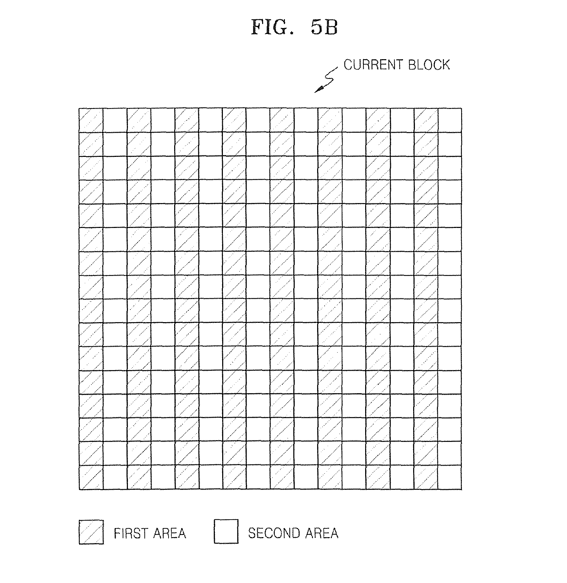

FIG. 4 is a block diagram of the intraprediction unit 330 of FIG. 3 according to an exemplary embodiment of the present invention, and FIGS. 5A and 5B illustrate division of an input block, performed by a block division unit 331 of FIG. 4.

Referring to FIG. 4, the intraprediction unit 330 includes the block division unit 331, a first intrapredictor 332, a second intrapredictor 333, and an addition unit 334.

The block division unit 331 divides an input current block into at least two areas. For example, as illustrated in FIG. 5A, the block division unit 331 may divide the current block into a first area including odd-numbered horizontal lines and a second area including even-numbered horizontal lines. As illustrated in FIG. 5B, the block division unit 331 may alternatively divide the current block into a first area including odd-numbered vertical lines and a second area including even-numbered vertical lines. The divisions of an input block illustrated in FIGS. 5A and 5B are only examples, and the block division unit 331 may divide the input block into areas of various patterns. In addition, the first area and the second area may be interchanged.

The first intrapredictor 332 first performs intraprediction on pixels of the first area using pixels of a neighboring block of the current block. Intraprediction according to the H.264 standard or other intraprediction methods using pixels of neighboring blocks may be applied. In the following description, intraprediction according to the H.264 standard is used as an illustrative example.

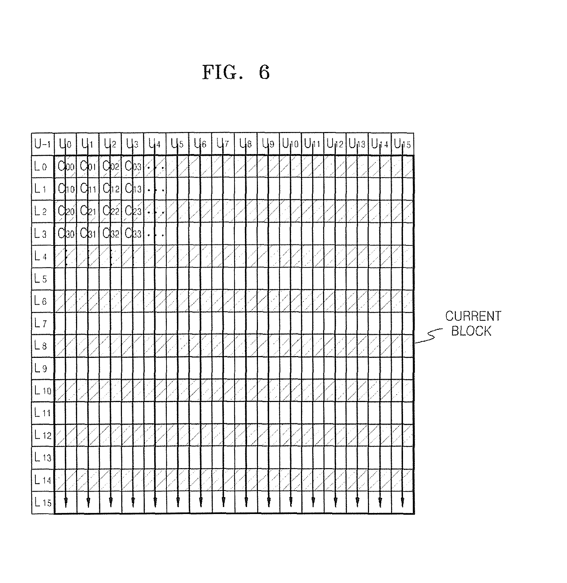

FIG. 6 illustrates intraprediction of an input current block divided as illustrated in FIG. 5A, performed by the first intrapredictor 332 of FIG. 4. In FIG. 6, C_{xy} indicates a pixel at an x^{th} row and an y^{th} column in the current block.

In FIG. 6, pixels of the first area are intrapredicted according to a vertical mode among the intraprediction modes of the H.264 standards. In intraprediction according to the vertical mode, the first intrapredictor 332 first predicts pixel values of pixels U₀ through U₁₅ adjacent above the current block to be the pixel values of the pixels of the first area. In other words, the pixel value of the pixel U₀ is predicted to be the pixel values of eight pixels of the first column of the first area (i.e., the shaded region), the pixel value of the pixel U₁ is predicted to be the pixel values of eight pixels of the second column of the first area, and the pixel value of the pixel U₂ is predicted to be the pixel values of eight pixels of the third column of the first area, and so on. In other words, pixels C₀₀, C₂₀, C₄₀, ..., C₁₄₀ have the same prediction value as the pixel U₀ of a neighboring block located above the current block. Similarly, pixels C₀₁, C₂₁, C₄₁, ..., C₁₄₁ have the same prediction value as the pixel U₁, and pixels C₀₂, C₂₂, C₄₂, ..., C₁₄₂ have the same prediction value as the pixel U₂. In addition, the pixel values of pixels of the fourth through sixteenth columns of the first area are predicted from the pixel values of pixels U₃ through U₁₅ of the neighboring block located above the current block. Although not shown in the figures, after the first intrapredictor 332 performs intraprediction according to various intraprediction modes such as a horizontal mode, it compares the costs of the intraprediction modes according to the difference between an image of the intrapredicted first area and a portion of the original image corresponding to the first area in each intraprediction mode, to determine the intraprediction mode for the first area.

The first intrapredictor 332 may perform intraprediction not only on a 16x16 block but also on an 8x8 block or a 4x4 block using pixels of neighboring blocks.

The residue between video data of the intrapredicted first area and video data of the current block corresponding to the first area is transformed by the transformation unit 308 and then quantized by the quantization unit 310. When the transformation unit 308 transforms a 16x8 first area as illustrated in FIG. 6, it may perform 8x8 transformation twice or 4x4 transformation eight times. The transformation unit 308 may also perform transformation of various block sizes. The quantized residual video data of the first area undergoes inverse quantization in the inverse quantization unit 316 and inverse transform in the inverse transformation unit 318, is added to video data of the intrapredicted first area for reconstruction, and is then input to the second intrapredictor 333.

The second intrapredictor 333 receives reconstructed video data of the first area and performs intraprediction on pixels of the second area except for an image corresponding to the first area. Since the pixels of the first area are intrapredicted by the first intrapredictor 332 and then reconstructed through transformation, quantization, inverse quantization, and inverse transformation, they are available for processing the pixels of the second area.

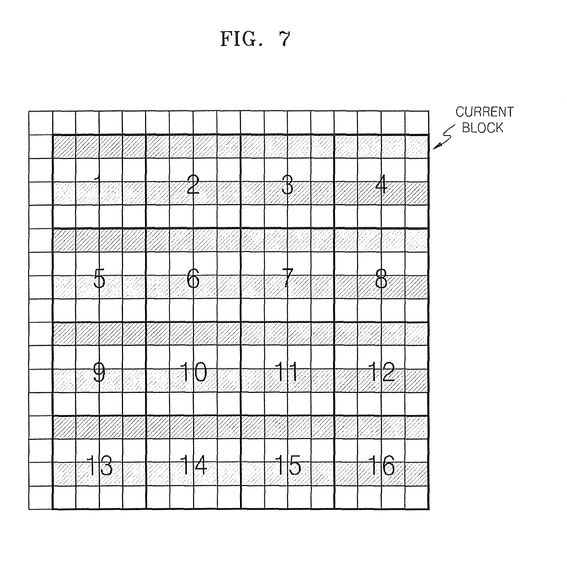

FIG. 7 illustrates processing orders in which the second intrapredictor 333 processes 4x4 blocks according to an exemplary embodiment of the present invention. Although the second intrapredictor 333 predicts pixels of the second area for each 4x4 block in the following description, it can be easily understood that the second intrapredictor 333 can predict pixels of the second area for each 8x8 block or 16x16 block.

Referring to FIG. 7, the second intrapredictor 333 processes 4x4 blocks 1-16 in a raster scan order in which the blocks are processed left-to-right and top-to-bottom. According to the processing order, the second intrapredictor 333 predicts pixels of the second area using reconstructed pixels of the first area as below.

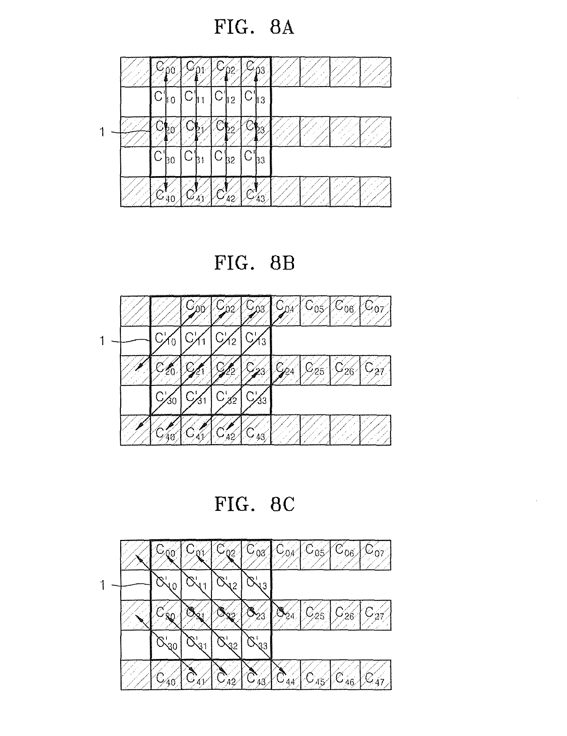

FIGS. 8A through 8C illustrate the prediction of pixels of the second area of a first block among the 4x4 blocks 1-16 illustrated in FIG. 7. FIGS. 8A through 8C show prediction modes in which pixels of the second area are predicted using pixels of the first area positioned in 90°, 45°, and 135° directions with respect to the pixels of the second area. The prediction modes are classified according to the direction in which pixels of the first area referred to by pixels of the second area are positioned. In FIGS. 8A through 8C, C'_{xy} indicates a pixel of the second area predicted using pixels of the first area, and an arrow indicates a prediction direction in each prediction mode. Here, a prime symbol (') is used to indicate that a pixel of the second area is predicted using pixels of the first area.

Referring to FIG. 8A, the second intrapredictor 333 predicts a pixel of the second area using reconstructed pixels of the first area located above and below the pixel of the second area. For example, a pixel C'₁₀ of the second area is predicted using (C₀₀+C₂₀)/2, i.e., the average of pixels C₀₀ and C₂₀ of the first area adjacent above and adjacent below the pixel C'₁₀ of the second area. In other words, (C₀₀+C₂₀)/2 is used as a predictor for the pixel C'₁₀. Similarly, other pixels of the second area may be predicted using averages of pixels of the first area adjacent above and adjacent below the pixels of the second area.

Referring to FIG. 8B, the second intrapredictor 333 may use the average of pixels of the first area located on a straight line in the 45° direction with respect to a pixel of the second area as a predictor for the pixel of the second area. For example, a pixel C'₁₁ of the second area is predicted as the average of pixels C₀₂ and C₂₀ of the first area, i.e., (C₀₀+C₂₀)/2.

Referring to FIG. 8C, the second intrapredictor 333 may use the average of pixels of the first area located on a straight line in the 135° direction with respect to a pixel of the second area as a predictor for the pixel of the second area. For example, a pixel C'₁₁ of the second area is predicted as the average of pixels C₀₀ and C₂₂ of the first area, i.e., (C₀₀+C₂₂)/2. The second intrapredictor 333 also may predict pixels of the second area by sampling pixels of the first area at various angles, without being limited to the examples illustrated in FIGS. 8A through 8C. In the case of a 0° direction, a pixel of the second area is predicted using pixels of a second area of a block to the left of the current block as in a horizontal mode of conventional H.264 intraprediction.

After the second intrapredictor 333 performs intraprediction on pixels of the second area in prediction modes using various angles, it compares the costs of the prediction modes according to the difference between an intrapredicted image of the second area and a portion of the original image corresponding to the second area in each intraprediction mode, to determine which pixels of the first area, i.e., pixels from which direction, are to be used for prediction of pixels of the second area. The second intrapredictor 333 also adds information about the determined prediction mode to a header of a bitstream.

The second intrapredictor 333 may use pixels of a neighboring block located to the left of the current block and pixels of a neighboring block located above the current block when processing the remaining blocks except for the thirteenth, fourteenth, fifteenth, and sixteenth blocks of FIG. 7. The second intrapredictor 333 may also use pixels of a neighboring block located to the right of the current block when processing the remaining blocks except for the fourth, eighth, twelfth, and sixteenth blocks of FIG. 7. When available pixels of the first area are limited, as in the fourth, eighth, twelfth, thirteenth, fourteenth, fifteenth and sixteenth blocks of FIG. 7, the second intrapredictor 333 may predict pixels of the second area as follows.

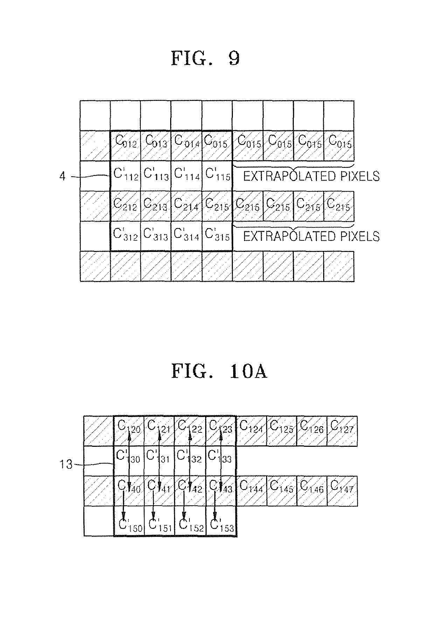

FIG. 9 illustrates the generation of right neighboring pixels performed by the second intrapredictor 333 to process a fourth block of FIG. 7 according to an exemplary embodiment of the present invention.

As mentioned above, in some prediction modes implemented by the second intrapredictor 333, available pixels of the first area may be limited. For example, in prediction of pixels of the second area in the rightmost columns of the fourth, eighth, twelfth, and sixteenth blocks of FIG. 7, available pixels of the first area are limited when the pixels of the second area are predicted using pixels of the first area in the 45° or 135° direction with respect to the pixels of the second area. In this case, the second intrapredictor 333 extends available pixels of the first area for use in prediction of pixels of the second area.

Referring to FIG. 9, when the second intrapredictor 333 predicts a pixel C'₁₁₅ of the second area of the fourth block of FIG. 7 using pixels of the first area positioned in the 45° direction with respect to the pixel C'₁₁₅ of the second area, a pixel C₂₁₄ located below and to the left of the pixel C'₁₁₅ is already reconstructed and is thus available. However, since a pixel of the first area located above and to the right of the pixel C'₁₁₅ in the 45° direction is included in another macroblock and has not yet been processed, it cannot be used for prediction of the pixel C'₁₁₅. In this case, the second intrapredictor 333 extrapolates a pixel C₀₁₅ of the first area, i.e., extends the pixel C₀₁₅ to the right. After the second intrapredictor 333 extends the pixel C₀₁₅ through extrapolation, it may predict the pixel C'₁₁₅ of the second area as (C₀₁₅+C₂₁₄)/2. Similarly, when the second intrapredictor 333 predicts the pixel C'₁₁₅ of the second area using pixels of the first area positioned in the 135° direction with respect to the pixel C'₁₁₅, it may extend a pixel C₂₁₅ of the first area for use in prediction.

FIGS. 10A through 10C illustrate the prediction of pixels of the second area of a thirteenth block among the 4x4 blocks illustrated in FIG. 7.

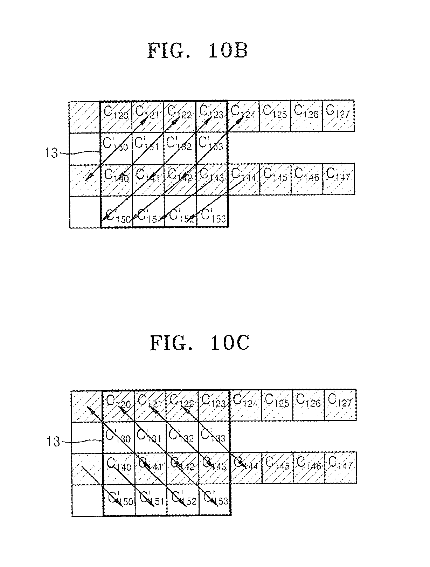

Since blocks located below the thirteenth, fourteenth, fifteenth, and sixteenth blocks of FIG. 7 have not yet been processed, pixels of the second area are predicted only using available pixels of the first area. Referring to FIG. 10A, when pixels C'₁₅₀, C'₁₅₁, C'₁₅₂, and C'₁₅₃ of the second area are predicted by referring to pixels of the first area located above and below the pixels C'₁₅₀, C'₁₅₁, C'₁₅₂, and C'₁₅₃ of the second area, pixels of the first area located below the pixels C'₁₅₀, C'₁₅₁, C'₁₅₂, and C'₁₅₃ of the second area are not reconstructed. In this case, the pixels C'₁₅₀, C'₁₅₁, C'₁₅₂, and C'₁₅₃ of the second area are predicted using only reconstructed pixels of the first area located above the pixels C'₁₅₀, C'₁₅₁, C'₁₅₂, and C'₁₅₃ of the second area. For example, the pixel C'₁₅₀ of the second area is predicted using only a pixel C₁₄₀ of the first area located above the pixel C₁₅₀ as a predictor in the prediction mode using the 90° direction. Similarly, referring to FIG. 10B, in the prediction mode using the 45° direction, the pixel C'₁₅₀ of the second area is predicted using only a pixel C₁₄₁ of the first area located above and to the left of the pixel C'₁₅₀. Referring to FIG. 10C, in the prediction mode using the 135° direction, the pixel C'₁₅₁ of the second area is predicted using only the pixel C₁₄₀ of the first area located above and to the left of the pixel C'₁₅₁.

When an input block is divided into the at least two areas, i.e., a first area and a second area, for intraprediction encoding, the second intrapredictor 333 adds a flag indicating division of the block and direction information indicating a prediction direction of a pixel of the second area to a header of a bitstream.

Through the process described above, prediction data of the first area intrapredicted by the first intrapredictor 332 and data of the second area predicted using reconstructed prediction data of the first area by the second intrapredictor 333 are added by the addition unit 334 and an intrapredicted input block is finally output.

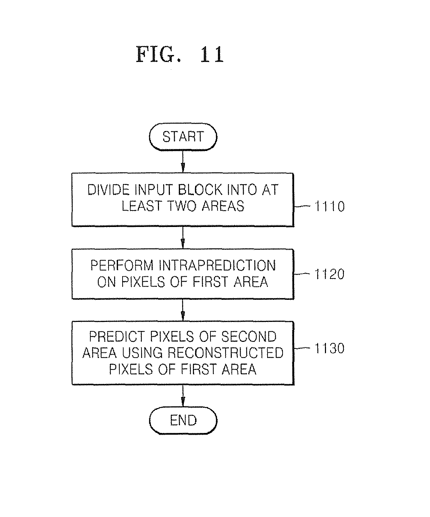

FIG. 11 is a flowchart illustrating a method of video intraprediction encoding according to an exemplary embodiment of the present invention.

Referring to FIG. 11, an input current block is divided into at least two areas in operation 1110. Here, an area that is subject to intraprediction using pixels of a neighboring block of the current block will be referred to as a first area, and an area that is subject to prediction using reconstructed data of the first area will be referred to as a second area.

In operation 1120, intraprediction-encoding is performed on pixels of the first area using pixels of the neighboring block.

In operation 1130, after the intrapredicted pixels of the first area are reconstructed, a pixel of the second area is predicted using the reconstructed pixels of the first area in one of a plurality of prediction modes. When the pixel of the second area is predicted, the average of reconstructed pixels of the first area in a certain direction with respect to the pixel of the second area may be used as a predictor. As stated above, the prediction modes may be classified according to the direction in which pixels of the first area referred to by the pixel of the second area are positioned. In exemplary embodiments of the present invention, a flag indicating whether a received bitstream is encoded after block division, and direction information indicating a direction in which pixels of the first area referred to for prediction of the pixel of the second area are positioned, are included in a header of the encoded bitstream.

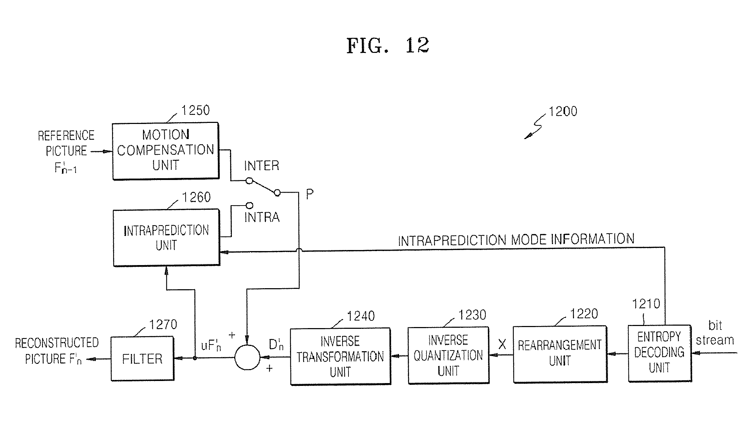

FIG. 12 is a block diagram of a video decoder 1200 which uses an apparatus for video intraprediction decoding according to an exemplary embodiment of the present invention.

Referring to FIG. 12, the video decoder 1200 includes an entropy-decoding unit 1210, a rearrangement unit 1220, an inverse quantization unit 1230, an inverse transformation unit 1240, a motion compensation unit 1250, an intraprediction unit 1260, and a filter 1270.

The entropy-decoding unit 1210 and the rearrangement unit 1220 receive a compressed bitstream and perform entropy decoding, thereby generating a quantized coefficient X. The inverse quantization unit 1230 and the inverse transformation unit 1240 perform inverse quantization and an inverse transformation on the quantized coefficient X, thereby extracting transformation encoding coefficients, motion vector information, header information, and intraprediction mode information. The intraprediction mode information includes a flag indicating whether a received bitstream is encoded after block division according to an exemplary embodiment of the present invention, and direction information indicating a direction in which pixels of the first area referred to for prediction of a pixel of the second area are positioned. The motion compensation unit 1250 and the intraprediction unit 1260 generate a predicted block according to an encoded picture type using the decoded header information, and the predicted block is added to an error D'ₙ to generate uF'ₙ. uF'ₙ is processed by the filter 1270, and thus a reconstructed picture F'ₙ is generated.

The intraprediction unit 1260 determines an intraprediction mode used in encoding the current block to be decoded using the intraprediction mode information included in a received bitstream. When the received bitstream has been intrapredicted according to an exemplary embodiment of the present invention, the intraprediction unit 1260 performs intraprediction decoding on pixels of the first area and decodes pixels of the second area using the direction information included in the bitstream and the decoded pixels of the first area.

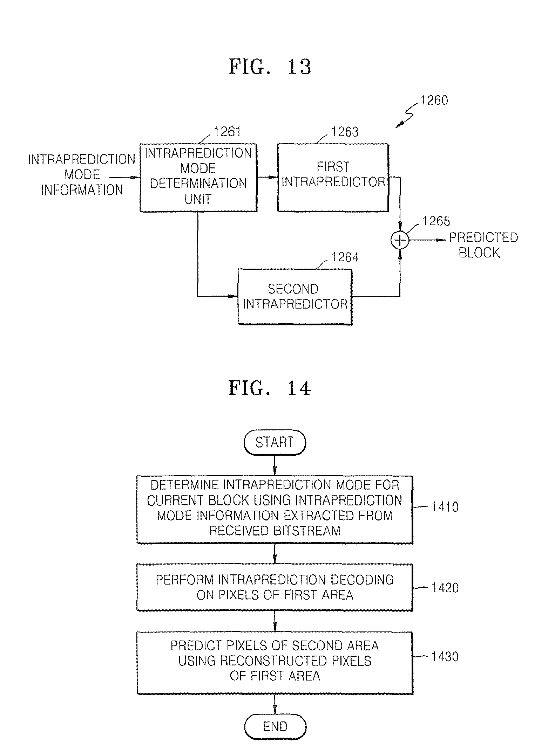

FIG. 13 is a block diagram of the intraprediction unit 1260 of FIG. 12 according to an exemplary embodiment of the present invention.

Referring to FIG. 13, the intraprediction unit 1260 includes an intraprediction mode determination unit 1261, a first intrapredictor 1263, a second intrapredictor 1264, and an addition unit 1265.

The intraprediction mode determination unit 1261 determines the intraprediction mode in which the current block to be intraprediction-decoded has been intraprediction-encoded based on the intraprediction mode information extracted from the received bitstream. A video decoder that decodes only a compressed bitstream in which each block is divided into at least two areas according to an exemplary embodiment of the present invention may not include the intraprediction mode determination unit 1261. In this case, although not shown in the figures, a receiving unit may be substituted for the intraprediction mode determination unit 1261, to receive data for pixels of the first area that are intraprediction-encoded using pixels of a neighboring block and the direction information indicating a direction in which pixels of the first area referred to for reconstruction of pixels of the second area that are predicted using reconstructed pixel information of the first area are positioned.

Returning now to the description of Fig. 13, when the determined intraprediction mode is an intraprediction mode according to a related art, the first intrapredictor 1263 performs intraprediction decoding on the received bitstream according to a related art.

However, when the received bitstream is intraprediction-encoded according to an exemplary embodiment of the present invention, the first intrapredictor 1263 first performs intraprediction-decoding on the first area using data for pixels of the first area included in the received bitstream. Data for pixels of the first area decoded by the first intrapredictor 1263 is input to the second intrapredictor 1264.

The second intrapredictor 1264 receives the reconstructed data for the first area and the direction information included in the bitstream and predicts pixels of the second area using the average of pixels of the first area positioned in a direction indicated by the direction information as a predictor. The function and operation of the second intrapredictor 1264 are similar to the second intrapredictor 333 of FIG. 4 used in the video encoder 300.

The data for the first area decoded by the first intrapredictor 1263 and the data for the second area decoded by the second intrapredictor 1263 are added by the addition unit 1265, thereby forming an intrapredicted block. The residue included in the bitstream is added to the intrapredicted block, thereby obtaining a reconstructed video.

FIG. 14 is a flowchart illustrating a method of video intraprediction decoding according to an exemplary embodiment of the present invention. As stated above, in the method of video intraprediction decoding according to an exemplary embodiment of the present invention, to decode a first area intrapredicted using pixels of neighboring blocks and a second area predicted from pixels of the first area, the first area is first intraprediction-decoded and pixels of the second area are intraprediction-decoded from the decoded pixels of the first area.

Referring to FIG. 14, a bitstream including data for pixels of the first area that are intraprediction-encoded using pixels of neighboring blocks, and direction information indicating a direction in which pixels of the first area referred to for reconstruction of a pixel of the second area predicted using reconstructed pixel information of the first area are positioned, is received to determine the intraprediction mode for the current block.

In operation 1420, intraprediction-decoding is performed on the pixels of the first area using the data for the pixels of the first area included in the received bitstream.

In operation 1430, based on the reconstructed data for the first area and the direction information included in the bitstream, the pixel of the second area is predicted using pixels of the first area positioned in the direction with respect to the pixel of the second area, indicated by the direction information included in the bitstream.

As described above, according to exemplary embodiments of the present invention, since intraprediction is performed by interpolating pixels of the current block having high correlation, a prediction block can be more similar to the current block, thereby improving coding efficiency.

Furthermore, according to exemplary embodiments of the present invention, video intraprediction uses not only pixel information of neighboring blocks but also pixel information of the current block to be intrapredicted, thereby improving prediction and coding efficiency.

One skilled in the art will understand that the present inventive concept can also be embodied as computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves. The computer-readable recording medium can also be distributed over network coupled computer systems so that the computer-readable code is stored and executed in a distributed fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of video intraprediction encoding, the method comprising:
dividing an input block into at least first and second areas (1110);
performing intraprediction-encoding on pixels of the first area areas using pixels of a neighboring block (1120);
reconstructing the intraprediction-encoded pixels of the first area; and
predicting pixels of the second area using the intraprediction-encoded pixels of the first area according to at least one prediction mode of a plurality of prediction modes (1130).

2. The method of claim 1, wherein the predicting the pixels of the second area comprises predicting the pixels of the second area using an average of pixels of the first area positioned in a certain direction with respect to the pixels of the second area according to the at least one prediction mode.

3. The method of claim 1 or 2, wherein the plurality of prediction modes are classified according to a direction in which the pixels of the first area used to predict the pixels of the second area are positioned.

4. The method of claim 1, 2, or 3 wherein the pixels of the second area are predicted by extending pixels of the first area, if there is no pixel of the first area in a prediction mode that is available to be used in the prediction.

5. The method of claim 1, 2, 3 or 4 wherein the pixels of the second area are predicted using only available reconstructed pixels of the first area, if only some of the reconstructed pixels of the first area are available in a prediction mode.

6. The method of any preceding claim, wherein the first area comprises even-numbered horizontal lines of the input block and the second area comprises odd-numbered horizontal lines of the input block, or the first area comprises the odd-numbered horizontal lines of the input block and the second area comprises the even-numbered horizontal lines of the input block.

7. The method of any one of claims 1-5, wherein the first area comprises even-numbered vertical lines of the input block and the second area comprises odd-numbered vertical lines of the input block, or the first area comprises odd-numbered vertical lines of the input block and the second area comprises even-numbered vertical lines of the input block.

8. The method of any preceding claim, wherein costs of the pixels of the second area predicted according to the at least one of the plurality of prediction modes are compared to determine the at least one prediction mode for prediction of the pixels of the second area.

9. The method of any preceding claim, wherein information indicating the at least one prediction mode is added to a header in a bitstream.

10. The method of any preceding claim, wherein predicting the pixels of the second area is performed for each block of a certain size.

11. An apparatus for video intraprediction encoding, the apparatus comprising:
a block division unit (331) which divides an input block into at least first and second areas;
a first intrapredictor (332) which performs intraprediction on pixels of the first area using pixels of a neighboring block; and
a second intrapredictor (333) which reconstructs the intraprediction-encoded pixels of the first area and predicts pixels of the second area using the intraprediction-encoded pixels of the first area according to at least one prediction mode of a plurality of prediction modes.

12. The apparatus of claim 11, wherein the second intrapredictor (333) predicts the pixels of the second area using an average of pixels of the first area positioned in a certain direction with respect to the pixels of the second area according to the at least one prediction mode.

13. The apparatus of claim 11 or 12, wherein the plurality of prediction modes are classified according to a direction in which the pixels of the first area used by the pixels of the second area are positioned.

14. The apparatus of claim 11, 12 or 13 wherein the second intrapredictor predicts the pixels of the second area by extending pixels of the first area, if there is no pixel of the first area in a prediction mode that is available to be used in the prediction.

15. The apparatus of claim 11, 12, 13 or 14 wherein the second intrapredictor predicts the pixels of the second area using only available reconstructed pixels of the first area, if only some of the reconstructed pixels of the first area are available in a prediction mode.

16. The apparatus of claim 11, 12, 13, 14 or 15wherein the first area comprises even-numbered horizontal lines of the input block and the second area comprises odd-numbered horizontal lines of the input block, or the first area comprises the odd-numbered horizontal lines of the input block and the second area comprises the even-numbered horizontal lines of the input block.

17. The apparatus of claim 11, 12, 13, 14 or 15 wherein the first area comprises even-numbered vertical lines of the input block and the second area comprises odd-numbered vertical lines of the input block, or the first area comprises the odd-numbered vertical lines of the input block and the second area comprises the even-numbered vertical lines of the input block.

18. The apparatus of any one of claims 11-17, wherein the second intrapredictor (333) compares costs of the pixels of the second area predicted according to the at least one prediction mode to determine a prediction mode for prediction of the pixels of the second area.

19. The apparatus of claim 18, wherein the second intrapredictor (333) adds information indicating the determined prediction mode to a header of a bitstream when the input block is intraprediction-encoded after division of the input block into at least the first area and the second area.

20. The apparatus of any one of claims 11-19, wherein the second intrapredictor (333) predicts the pixels of the second area for each block of a certain size.

21. A method of video intraprediction decoding, the method comprising:
receiving a bitstream comprising data for pixels of a first area that are intraprediction-encoded using pixels of a neighboring block and direction information;
determining an intraprediction mode for a current block (1410);
performing intraprediction-decoding on pixels of the first area using the received data for the pixels of the first area (1420); and
predicting the pixels of a second area using the received direction information and the intraprediction-decoded pixels for the first area (1430).

22. The method of claim 21, wherein the direction information indicates a direction in which pixels of the first area that are used for reconstruction of pixels of the second area predicted using reconstructed pixel information of the first area are positioned.

23. The method of claim 21 or 22, wherein predicting the pixels of the second area comprises predicting the pixels of the second area using an average of pixels of the first area positioned in a certain direction with respect to the pixels of the second area according to the at least one prediction mode.

24. A method of video intraprediction decoding, the method comprising:
receiving a bitstream comprising data for pixels of a first area that are intraprediction-encoded using pixels of a neighboring block and direction information (1410);
performing intraprediction-decoding on pixels of the first area using the received data for the pixels of the first area (1420); and
predicting the pixels of the second area using the received direction information and the intraprediction-decoded pixels for the first area (1430).

25. The method of claim 24, wherein predicting the pixels of the second area comprises predicting the pixels of the second area using an average of pixels of the first area positioned in a certain direction with respect to the pixels of the second area based on the direction information.

26. An apparatus for video intraprediction decoding, the apparatus comprising:
an intraprediction mode determination unit (1261) which receives a bitstream comprising data for pixels of a first area that are intraprediction-encoded using pixels of a neighboring block and direction information, and determines an intraprediction mode for a current block;
a first intrapredictor (1263) which performs intraprediction-decoding on pixels of the first area using the received data for the pixels of the first area; and
a second intrapredictor (1264) which predicts the pixels of the second area using the received direction information and the intraprediction-decoded pixels for the first area.

27. The apparatus of claim 26, wherein the direction information indicates a direction in which pixels of the first area that are used for reconstruction of pixels of the second area predicted using reconstructed pixel information of the first area are positioned.

28. The apparatus of claim 26 or 27, wherein the second intrapredictor predicts the pixels of the second area using an average of pixels of the first area positioned in a certain direction with respect to the pixels of the second area according to the prediction mode.

29. An apparatus for video intraprediction decoding, the apparatus comprising:
a receiving unit which receives a bitstream including data for pixels of a first area that are intraprediction-encoded using pixels of a neighboring block and direction information (1261);
a first intrapredictor (1263) which performs intraprediction-decoding on pixels of the first area using the received data for the pixels of the first area; and
a second intrapredictor (1264) which predicts the pixels of the second area using the received direction information and the intraprediction-decoded pixels for the first area.

30. The apparatus of claims 29, wherein the direction information indicates a direction in which pixels of the first area that are used for reconstruction of pixels of the second area predicted using reconstructed pixel information of the first area are positioned.

31. The apparatus of claim 29, wherein the second intrapredictor predicts the pixels of the second area using an average of pixels of the first area positioned in a certain direction with respect to the pixels of the second area based on the direction information.
